# EUROPEAN PATENT APPLICATION

(11) **EP 3 098 934 A1**
(43) Date of publication of application: **30.11.2016**
(21) Application number: 14879813.5
(22) Date of filing: 21.01.2014
(51) Int. Cl.: H02J 13/00, H04Q 9/00, G08C 17/02

(54) **POWER CONTROL DEVICE**

(71) Applicant: The Chugoku Electric Power Co., Inc., Hiroshima-shi, Hiroshima 730-8701 (JP)
(72) Inventor: KONO, Nobuyuki, Hiroshima-shi Hiroshima 730-8701 (JP); NAITO, Masaki, Hiroshima-shi Hiroshima 730-8701 (JP)
(74) Representative: Osha Liang
(86) International application number: PCT/JP2014/051029
(87) International publication number: WO 2015/111128

(57) **Abstract**

A power control device including a first detection device that detects that a knob provided on a room interior side of a door has turned to a first turn position when the door is locked, and a cutoff device that cuts off power supply to an electrical device provided in the room interior when the first detection device has detected that the knob has turned to the first turn position.

## Description

### [Technical Field]

The present invention relates to a power control device.

### [Background Art]

Electrical devices are known that are, for example, provided inside a home, and are operated with supplied power (for example, see Patent Literature 1).

### [Citation List]

### [Patent Literature].

[PTL 1] Japanese Patent Application Laid-Open No. 2011-160608

### [Summary of Invention]

### [Technical Problem]

For example, in electrical devices, including the electrical device in Patent Literature 1, power is supplied as standby power even when the electrical devices are not operating. It could therefore be difficult to reduce the amount of power consumption in a home provided with the electrical device to below the amount of power supplied as standby power.

### [Solution to Problem]

Mainly in order to address the above issue, the present invention is a power control device including a first detection device that detects that a knob provided on a room interior side of a door has turned to a first turn position when the door is locked, and a cutoff device that cuts off power supply to an electrical device provided in the room interior when the first detection device has detected that the knob has turned to the first turn position.

Other features of the present invention are made clear by the appended drawings and description of the present specification.

### [Advantageous Effects of Invention]

The present invention enables power supply to be cut off to an electrical device.

### [Brief Description of Drawings]

Fig. 1 is a diagram illustrating a residence in an embodiment of the present invention.
Fig. 2 is an exploded perspective view illustrating a door and a control device of an embodiment of the present invention.
Fig. 3 is a side view illustrating a door and a control device of an embodiment of the present invention.
Fig. 4 is a front view illustrating a control device in a state in which a knob of an embodiment of the present invention has been turned to a first turn position.
Fig. 5 is a front view illustrating a control device in a state in which a knob of an embodiment of the present invention has been turned to a second turn position.
Fig. 6 is a diagram illustrating a control circuit and the like of an embodiment of the present invention.
Fig. 7 is a table illustrating relationships between ON and OFF states of switches, detection signals, and control signals in an embodiment of the present invention.

### [Description of Embodiments]

At least the following matters are made clear from the appended drawings and description of the present specification.

### === Residence ===

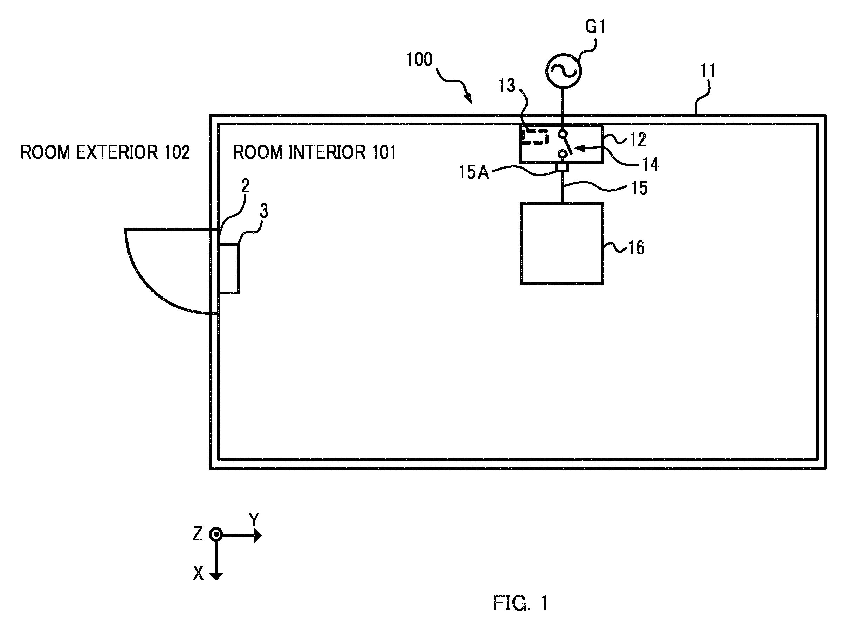

Explanation follows regarding a residence according to a present embodiment, with reference to Fig. 1. Fig. 1 illustrates a residence of the present embodiment. Note that Fig. 1 illustrates a state of a residence 100 as viewed from a ceiling side (+Z) toward a floor side (-Z).

The residence 100 is, for example, one unit of a building with multiple residents, such as an apartment building for single occupants or the like. The residence 100 may also be, for example, one room of a detached house, or one room of an office.

The residence 100 includes a door 2, a control device 3, walls 11, an outlet device 12 (cutoff device, supply device), and an electrical device 16. Note that, for example, plural doors 2, control devices 3, outlet devices 12, and electrical devices 16 may be respectively provided. The control device 3 and the outlet device 12 correspond to a power control device.

The walls 11 partition a room interior 101 from a room exterior 102 of the residence 100.

The door 2 is a hinged door provided at a specific position in the walls 11.

The electrical device 16 is an electrical device such as a television, an air conditioner, a printer, or a personal computer provided in the room interior 101. The electrical device 16 operates using power supplied from an alternating current source G1 via the outlet device 12. The electrical device 16 includes a power cable 15.

One end of the power cable 15 is connected to the electrical device 16, and the other end of the power cable 15 is provided with a plug 15A. The plug 15A is connected to the outlet device 12.

The outlet device 12 supplies power, or cuts off power supply, to the electrical device 16 connected to the outlet device 12 with the plug 15A. The outlet device 12 includes a switch 14 and a switch control device 13.

The switch 14, between the alternating current source G1 and the electrical device 16, switches ON or OFF. For example, when the switch 14 is switched ON, the alternating current source G1 and the electrical device 16 are electrically connected, and power is supplied from the alternating current source G1 to the electrical device 16. However, for example when the switch 14 is switched OFF, the alternating current source G1 and the electrical device 16 are electrically isolated from each other, and power is no longer supplied from the alternating current source G1 to the electrical device 16.

The switch control device 13 receives first and second control signals output from the control device 3, and controls ON and OFF switching of the switch 14 based on the received control signals.

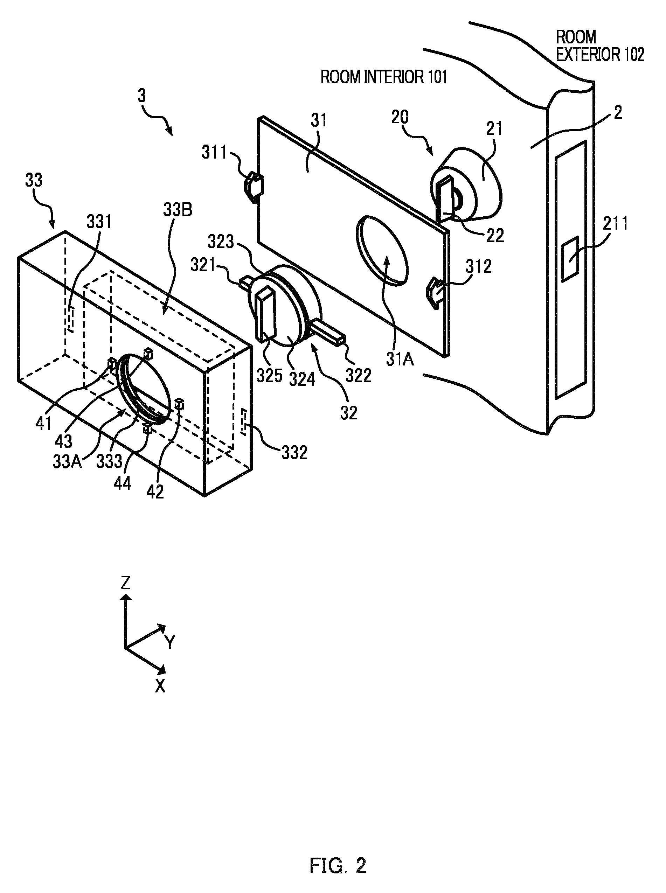

The control device 3 outputs the first control signal or the second control signal that control the switch control device 13 based on a turn position of a knob 22 of a thumb turn 20 (Fig. 2).

### === Door ===

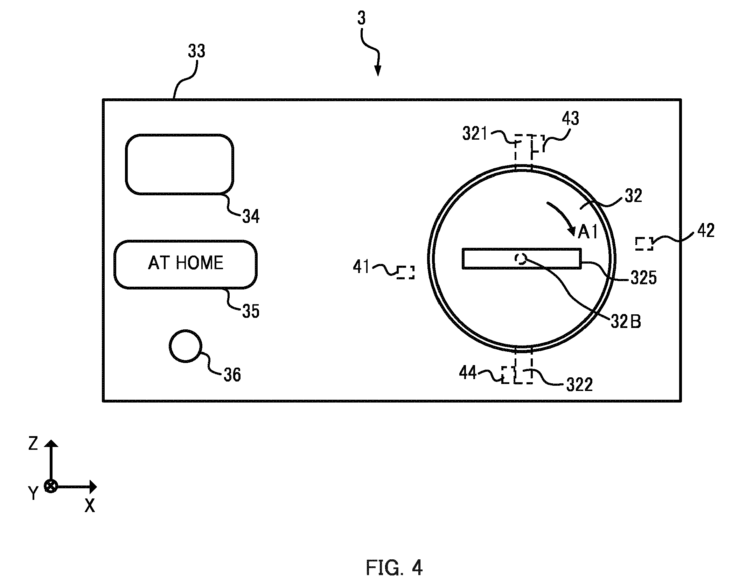

Explanation follows regarding the door of the present embodiment, with reference to Fig. 2. Fig. 2 is an exploded perspective view illustrating the door and the control device of the present embodiment. Note that for ease of explanation, an "at home" switch 35 (Fig. 4), a motion sensor 36 (detection device) and a wireless communication section 34, which are provided on the front face of a main body 33 (housing), are omitted from illustration in Fig. 2. Although first piezoelectric elements 43, 44, second piezoelectric elements 41, 42, a hollow portion 33B, and engagement holes 331, 332 are in a state not normally visible, for ease of explanation they are indicated in Fig. 2 by dashed lines.

The door 2 includes the thumb turn 20 and a deadbolt 211.

The thumb turn 20 is provided on the room interior 101 side of the door 2. The thumb turn 20 includes a body 21 and the knob 22.

A Z-axis is an axis running along a vertical direction. A direction running from a lower side toward an upper side is denoted by +Z, and a direction running from the upper side toward the lower side is denoted by -Z. A Y-axis is an axis running along a turn axis of the knob 22 of the thumb turn 20. A direction running from the room interior 101 side toward the room exterior 102 side is denoted by +Y, and a direction running from the room exterior 102 side toward the room interior 101 side is denoted by -Y. An X-axis is an axis orthogonal to the Y-axis and the Z-axis, and runs along a direction of movement of the deadbolt 211. A direction in which the deadbolt 211 projects out from the door 2 is denoted by +X, and a direction in which the deadbolt 211 retracts into the door 2 is denoted by -X.

The body 21 is provided at a specific position on the door 2.

The knob 22 is provided to the body 21. The knob 22 is attached to the door 2 through the body 21 so as to be capable of turning about a turn axis along the Y-axis that is orthogonal to the door 2. The knob 22 is capable of turning about approximately 90° in a clockwise direction as viewed from -Y toward +Y when in a state aligned with the vertical direction (Z-axis) (Fig. 2). The knob 22 is then capable of turning about approximately 90° in a counterclockwise direction as viewed from -Y toward +Y when in a state aligned with the horizontal direction (X-axis) (not illustrated in the drawings). Note that the state in which the knob 22 is aligned with the vertical direction is a state in which the length direction of the knob 22 is aligned with the Z-axis, as illustrated in Fig. 2. Moreover, the state in which the knob 22 is aligned with the horizontal direction is a state in which the length direction of the knob 22 is aligned with the X-axis.

The position of the knob 22 when the knob 22 is aligned with the X-axis is denoted as the first turn position of the knob 22. The position of the knob 22 when the knob 22 is aligned with the Z-axis is denoted as the second turn position of the knob 22. The knob 22 is turned to the first turn position or turned to the second turn position.

Note that the knob 22 is also turned to either the first or the second turn position by turn operation of a key inserted into a keyhole provided on the room exterior 102 side of the door 2. Namely, the knob 22 is turnable from both the room interior 101 side, and from the room exterior 102 side.

The deadbolt 211 projects out from the door 2 and retracts into the door 2 according to turning of the knob 22. For example, the deadbolt 211 projects out from the door 2 when the knob 22 is turned to the first turn position. The knob 22 retracts inside the door 2 when the knob 22 is turned to the second turn position. The door 2 is therefore locked when the knob 22 is turned toward the first turn position in a closed state of the door 2. The door 2 is then unlocked when the knob 22 is turned toward the second turn position.

### === Control Device Structure ===

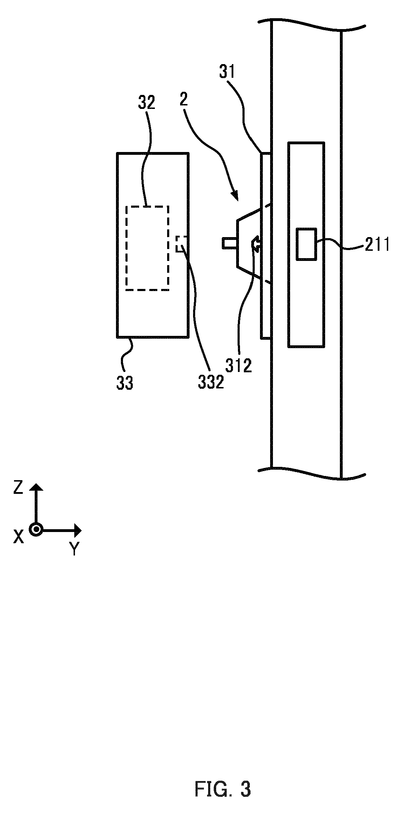

Explanation follows regarding the control device of the present embodiment, with reference to Fig. 2 and Fig. 3. Fig. 3 is a side view illustrating the door and the control device of the present embodiment.

The control device 3 is detachably attached to the door 2 on the room interior 101 side. The control device 3 includes an attachment plate 31, a cover 32, and a main body 33.

### = Attachment Plate =

The attachment plate 31 is a plate member attached to a room interior side face of the door 2. For example, the attachment plate 31 has a substantially rectangular shape, and is formed using an insulating resin or the like. The attachment plate 31 is provided with an insertion hole 31A and engagement tabs 311, 312.

The thumb turn 20 is inserted through the insertion hole 31A. The diameter of the insertion hole 31A is set larger than the diameter of the body 21 so as to allow insertion of the body 21.

The engagement tabs 311, 312 respectively project out toward -Y from both X-axis direction ends so as to engage with the main body 33 in a state in which the engagement tabs 311, 312 are inserted into the engagement holes 331, 332 of the main body 33.

### = Main Body =

The main body 33 is a main body of the control device 3, and is attached to the door 2 using the attachment plate 31. The main body 33 has, for example, a substantially rectangular column shape, and is formed from an insulating resin or the like. The main body 33 is provided with an exposure hole 33A, the engagement holes 331, 332, the first piezoelectric elements 43, 44, the second piezoelectric elements 41, 42, and the hollow portion 33B.

The engagement holes 331, 332 are holes with which the engagement tabs 311, 312 detachably engage, and are provided at positions facing the engagement tabs 311, 312. Namely, the main body 33 is detachable with respect to the attachment plate 31.

The exposure hole 33A is, for example, a circular hole that exposes the cover 32. The exposure hole 33A is provided at a position facing the thumb turn 21. A ridge portion 333 is formed inside the exposure hole 33A of the main body 33. The ridge portion 333 is a protrusion employed during attachment of the cover 32 to the main body 33, and is provided around the entire circumference of the exposure hole 33A. The ridge portion 333 has a shape so as to be inserted into a groove 323 of the cover 32. The exposure hole 33A also functions as an attachment hole for attaching the cover 32 to the main body 33 so as to be capable of turning. The diameter of the exposure hole 33A is set larger than the diameter of the cover 32, such that the cover 32 can be provided inside the exposure hole 33A. The cover 32 that is exposed from the exposure hole 33A when the cover 32 is attached to the main body 33 is turnably operated.

The hollow portion 33B is a cavity that houses the cover 32 attached to the main body 33 such that the cover 32 is capable of turning. The hollow portion 33B is open on the +Y side, and is in communication with the exposure hole 33A on the -Y side.

The first piezoelectric elements 43, 44 and the second piezoelectric elements 41, 42 are elements that generate power when pressed by projection tabs 321, 322 of the cover 32. The first piezoelectric elements 43, 44 and the second piezoelectric elements 41, 42 are provided in the hollow portion 33B of the main body 33. Note that the first piezoelectric elements 43, 44 and the projection tabs 321, 322 correspond to a first detection device. The second piezoelectric elements 41, 42 and the projection tabs 321, 322 correspond to a second detection device.

The respective first piezoelectric elements 43, 44 are provided at positions that are pressed by the projection tabs 321, 322 when the knob 22 is turned to the first turn position when the control device 3 is attached to the door 2. The first piezoelectric elements 43, 44 are, for example, provided on either side of the exposure hole 33A in the vertical direction.

The second piezoelectric elements 41, 42 are respectively provided at positions that are pressed by the projection tabs 321, 322 when the knob 22 is turned to the second turn position with the control device 3 attached to the door 2. The second piezoelectric elements 41, 42 are, for example, provided on either side of the exposure hole 33A in the horizontal direction.

### = Cover =

The cover 32 is attached to the thumb turn 20, and turns together with the knob 22. The cover 32 is, for example, formed from an insulating resin or the like. The cover 32 includes a main body 324, the projection tabs 321, 322, and a knob 325. Note that the main body 324, the projection tabs 321, 322, and the knob 325 may be integrally formed to one another.

The main body 324 has a tube shape, for example, so as to enable insertion of the thumb turn 20. An opening (not illustrated in the drawings) where the thumb turn 20 is inserted inside the main body 324 is provided on the +Y side of the main body 324. The knob 325 is provided on the -Y side of the main body 324. The groove 323 into which the ridge portion 333 of the main body 33 is inserted is provided at an outer peripheral face of the main body 324. The groove 323 is a groove employed to attach the cover 32 to the main body 33, and is provided around the entire circumference of the cover 32.

The knob 22 fits into the knob 325, thereby fixing the knob 325 to the knob 22. The knob 325 has a hollow shape. The inside of the knob 325 is in communication with the inside of the main body 324. Accordingly, when the thumb turn 20 is inserted into the cover 32, the knob 22 fits into the knob 325 at the inside of the cover 32. The knob 325 is thereby fixed to the knob 22.

The projecting tabs 321, 322 have substantially rectangular column shapes, for example, and are tabs that are pressed against the first piezoelectric elements 43, 44 and the second piezoelectric elements 41, 42. The projecting tabs 321, 322 project out from the outer peripheral face of the main body 324. The projecting tabs 321, 322 project out in a direction away from the main body 324 in an XZ plane. The projecting tabs 321, 322 are provided on both sides of the main body 324 such that the length direction of the projecting tabs 321, 322 is substantially orthogonal to the length direction of the knob 325. Note that, for example, the projecting tabs 321, 322 may each have a substantially circular column shape, or may have a polygonal column shape other than a rectangular column shape.

### = Attachment of Control device to Door =

The attachment plate 31 is attached to the door 2 in a state in which the thumb turn 20 is inserted into the insertion hole 31A. The attachment plate 31 may be fixed using screws, or may be fixed using double-sided adhesive tape, adhesive, hook-and-loop fasteners, or the like.

The cover 32 is attached to the exposure hole 33A of the main body 33. When this is performed, a leading end of the ridge portion 333 is inserted into the groove 323, such that the ridge portion 333 catches in the groove 323, thereby preventing the cover 32 from coming away from the main body 33, for example under its own weight. Moreover, when this has been performed, the cover 32 is capable of turning about a turn shaft 32B (Fig. 4) passing through the center of the cover 32 and running along the Y-axis.

The main body 33 is attached to the attachment plate 31 in an attached state of the cover 23 to the main body 33. The engagement tabs 311, 312 engage with the main body 33 in an inserted state of the engagement tabs 311, 312 into the engagement holes 331, 332, thereby fixing the main body 33 to the attachment plate 31. The control device 3 is attached to the door 2 in this manner.

### = Control Circuit, etc. =

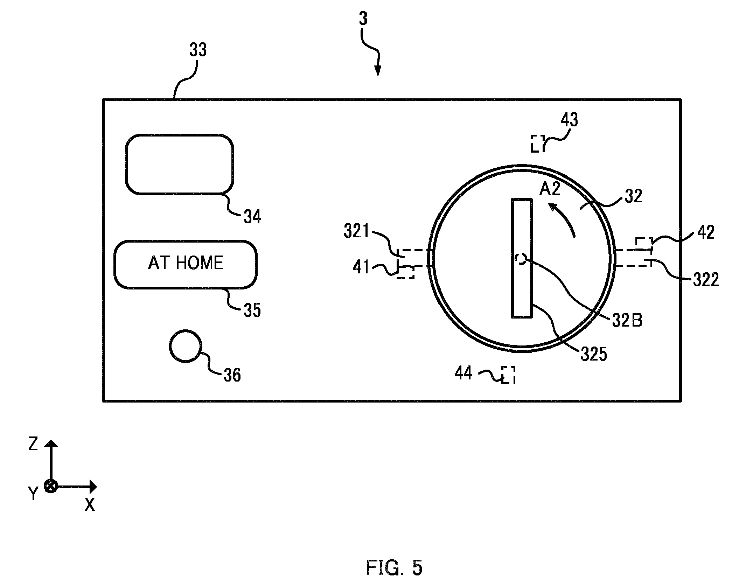

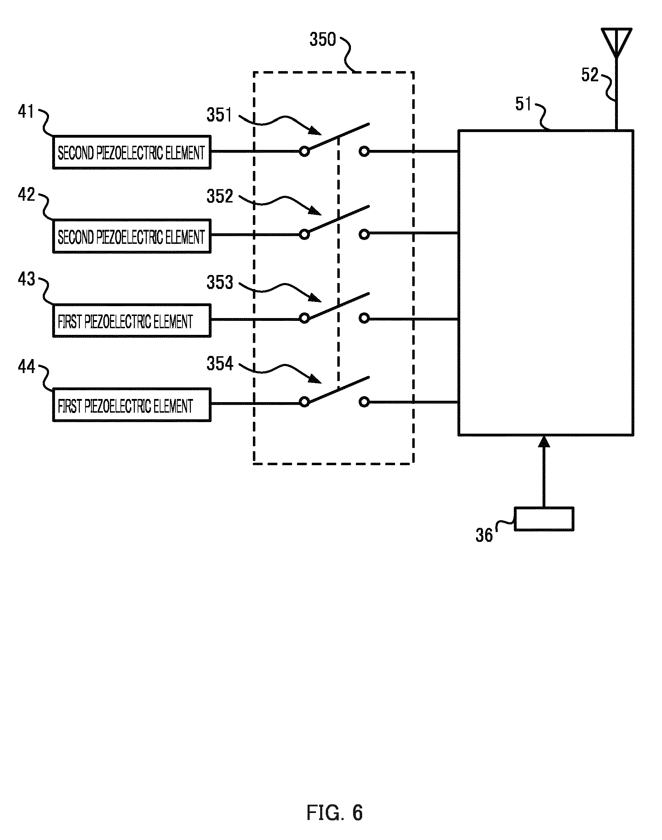

Explanation follows regarding a control circuit and the like of the present embodiment, with reference to Fig. 4 to Fig. 6. Fig. 4 is a front view illustrating the control device of the present embodiment in a state in which the knob has been turned to the first turn position. Fig. 5 is a front view illustrating the control device of the present embodiment in a state in which the knob has been turned to the second turn position. Fig. 6 is a diagram illustrating a control circuit and the like of the present embodiment.

Note that although the second piezoelectric elements 41, 42, the first piezoelectric elements 43, 44, and the projecting tabs 321, 322 are in a state not normally visible, they are indicated in Fig. 4 and Fig. 5 by dashed lines for ease of explanation.

The control device 3 includes the wireless communication section 34, the "at home" switch 35, the motion sensor 36, a switch device 350 (Fig. 6), and a control circuit 51.

An antenna 52 of the control circuit 51 is provided to the wireless communication section 34 for communicating wirelessly with the switch control device 13.

The "at home" switch 35 is a mechanical position-holding push-button switch that is employed to switch switches 351 to 354 of the switch device 350 (disabling device) ON or OFF. Each time the "at home" switch 35 is pushed, the "at home" switch 35 is held at a first position projecting out from the main body 33, or at a second position retracted inside the main body 33.

The switches 351 to 354 are respectively switched ON or OFF in synchronization with each other each time the "at home" switch 35 is pushed. For example, when the "at home" switch 35 is held at the first position, all of the switches 351 to 354 are switched ON. However, for example, when the "at home" switch 35 is held at the second position, all of the switches 351 to 354 are switched OFF. Note that since the "at home" switch 35 is a mechanical switch, power is not required in order to switch the switches 351 to 354 ON and OFF.

The motion sensor 36 is, for example, an infrared sensor that detects whether or not a person is present in the room interior 101. For example, when the motion sensor 36 detects the presence of a person in the room interior 101, the motion sensor 36 outputs a detection signal to the control circuit 51. However, when the motion sensor 36 detects that nobody is present in the room interior 101, for example, the motion sensor 36 does not output a detection signal. The motion sensor 36 operates when supplied with power generated by at least one of the first piezoelectric elements 43, 44 or the second piezoelectric elements 41, 42 (also referred to as the "respective piezoelectric elements"). This thereby enables a reduction in the power consumption in the room interior 101, including that of the control device 3.

The control circuit 51 is supplied with power generated by the respective piezoelectric elements, as well as with detection signals output from the motion sensor 36. The control circuit 51 outputs the first or second control signals as wireless signals through the antenna 52 according to which piezoelectric elements out of the respective piezoelectric elements are supplying power, and whether or not a detection signal has been supplied. The control circuit 51 operates when supplied with power generated by at least one piezoelectric element out of the respective piezoelectric elements. This thereby enables a reduction in the power consumption in the room interior 101, including that of the control device 3.

For example, when a detection signal is supplied to the control circuit 51, the control circuit 51 does not output the first or second control signals, regardless of whether or not power is being supplied to the control circuit 51 from the respective piezoelectric elements.

For example, when power generated by either one of the first piezoelectric elements 43, 44 is supplied to the control circuit 51 when a detection signal is not being supplied to the control circuit 51, the control circuit 51 outputs the first control signal to switch OFF the switch 14. For example, when power generated by either one of the second piezoelectric elements 41, 42 is supplied to the control circuit 51 when a detection signal is not being supplied to the control circuit 51, the control circuit 51 outputs the second control signal to switch ON the switch 14.

For example, when the switches 351 to 354 are all switched ON, connections are made between each of the respective piezoelectric elements and the control circuit 51 such that power is supplied from the respective piezoelectric elements to the control circuit 51. For example, when the switches 351 to 354 are all switched OFF, each of the respective piezoelectric elements is isolated from the control circuit 51 such that the respective piezoelectric elements do not supply power to the control circuit 51. Namely, when the switches 351 to 354 are all switched OFF, the control circuit 51 does not operate, and is in a state in which the first and second control signals are not output.

### === Control Device Operation ===

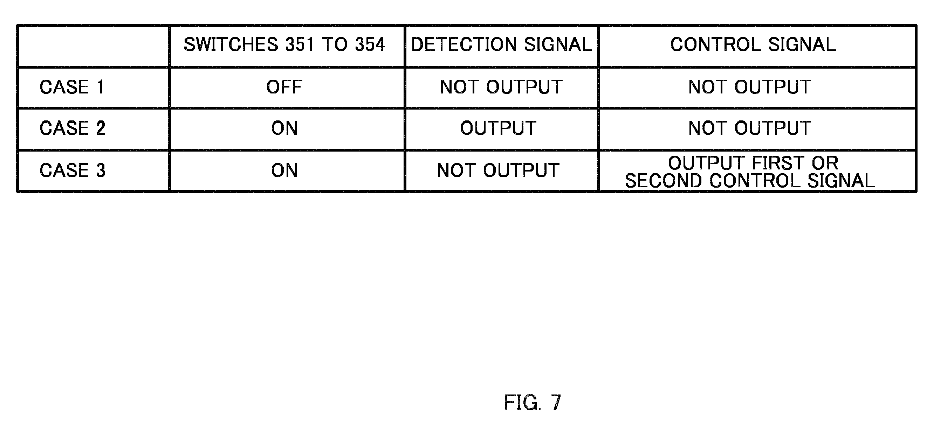

Explanation follows regarding the control circuit and the like of the present embodiment, with reference to Fig. 4, Fig. 5, and Fig. 7. Fig. 7 is a table illustrating relationships between ON and OFF states of the switches, detection signals, and control signals in the present embodiment.

### = Case 1 =

For example, when the occupant of the residence 100 is present in the room interior 101, the "at home" switch 35 is pressed so as to hold the "at home" switch 35 at the second position to prevent control by the control device 3. When this is performed, the switches 351 to 354 are all switched OFF. The control device 3 accordingly does not output the first or second control signals, regardless of whether or not the projecting tabs 321, 322 press the respective piezoelectric elements.

### = Case 2 =

For example, if the occupant of the residence 100 goes out in a state in which a friend of the occupant is present in the room interior 101, the "at home" switch 35 is pressed so as to hold the "at home" switch 35 at the first position. When this is performed, the switches 351 to 354 are all switched ON. The occupant uses a key to turn the knob 22 to the first turn position in order to lock the door 2 from the room exterior 102 side. When this is performed, the cover 32 turns in an A1 direction about the turn shaft 32B (Fig. 4), together with the knob 22. Then, when the knob 22 has been turned to the first turn position, end portions of the projecting tabs 321, 322 press against the respective first piezoelectric elements 43, 44. Power generated by the first piezoelectric elements 43, 44 is supplied to the motion sensor 36 and the control circuit 51.

The motion sensor 36 detects that there is a person (the friend of the occupant of the residence 100) present in the room interior 101, and transmits a detection signal to the control circuit 51. The control circuit 51 operates with power supplied from the first piezoelectric elements 43, 44; however the control circuit 51 does not output the first or second control signals due to being input with the detection signal.

### = Case 3 =

### <Going Out>

For example, when the occupant of the residence 100 goes out, the "at home" switch 35 is pressed so as to hold the "at home" switch 35 at the first position. When this is performed, the switches 351 to 354 are all switched ON. The occupant uses the key to turn the knob 22 to the first turn position so as to lock the door 2 from the room exterior 102 side. When this is performed, as described above, power generated by the first piezoelectric elements 43, 44 is supplied to the motion sensor 36 and the control circuit 51. Note that when this is performed, the first piezoelectric elements 43, 44 and the projecting tabs 321, 322 detect that the knob 22 has been turned to the first turn position.

The motion sensor 36 detects that there is nobody present in the room interior 101, and adopts a state in which the motion sensor 36 does not output a detection signal. The control circuit 51 operates with power supplied from the first piezoelectric elements 43, 44, and outputs the first control signal. The switch control device 13 receives the first control signal and switches OFF the switch 14. This thereby creates a state in which the electrical device 16 is not supplied with power from the alternating current source G1. This thereby enables a reduction in standby power consumption by the electrical device 16.

### <Returning Home>

Later, for example when the occupant of the residence 100 returns home, the occupant uses the key to turn the knob 22 to the second turn position so as to unlock the door 2 from the room exterior 102 side.

When this is performed, the cover 32 turns in an A2 direction about the turn shaft 32B (Fig. 5), together with the knob 22. Then, when the knob 22 has been turned to the second turn position, the end portions of the projecting tabs 321, 322 press against the respective second piezoelectric elements 41, 42. Power generated by the second piezoelectric elements 41, 42 is supplied to the motion sensor 36 and the control circuit 51. Note that when this is performed, the second piezoelectric elements 41, 42 and the projecting tabs 321, 322 detect that the knob 22 has turned to the second turn position.

The motion sensor 36 detects that there is nobody present in the room interior 101, and adopts a state in which the motion sensor 36 does not output a detection signal. The control circuit 51 operates with power supplied from the second piezoelectric elements 41, 42, and outputs the second control signal. The switch control device 13 receives the second control signal and switches ON the switch 14. The electrical device 16 is thereby supplied with power from the alternating current source G1.

As described above, when the door 2 is locked, the first piezoelectric elements 43, 44 and the projecting tabs 321, 322 detect that the knob 22 provided on the room interior 101 side of the door 2 has turned to the first turn position. When the first piezoelectric elements 43, 44 and the projecting tabs 321, 322 have detected that the knob 22 has turned to the first turn position, the control device 3 and the outlet device 12 cut off the power supply to the electrical device 16 provided in the room interior 101. This thereby enables power supplied to the electrical device 16 as standby power of the electrical device 16 to be cut off when the occupant of the residence 100 locks the door 2 when going out, for example. This thereby enables a reduction in the power consumption of the residence 100.

Moreover, the projecting tabs 321, 322 turn together with the knob 22. The first piezoelectric elements 43, 44 generate power when pressed by the projecting tabs 321, 322 when the knob 22 is turned to the first turn position. The first control signal is output based on the power generated by the first piezoelectric elements 43, 44. On receipt of the first control signal, the outlet device 12 switches OFF the switch 14 so as to cut off the power supply to the electrical device 16. Note that the first control signal can be output utilizing the power generated by the first piezoelectric elements 43, 44. A power supply to the control device 3 from the alternating current source G1, for example, in order to output the first control signal is thus rendered unnecessary. This thereby enables a further reduction in the power consumption of the residence 100.

Moreover, a plurality of the projecting tabs 321, 322 and a plurality of the first piezoelectric elements 43, 44 are provided. The first control signal is output when at least one out of the first piezoelectric elements 43, 44 generates power. When this is performed, the outlet device 12 switches OFF the switch 14 so as to cut off the power supply to the electrical device 16. This thereby enables the power supply to the electrical device 16 to be reliably cut off, even if, for example, one out of the first piezoelectric elements 43, 44 is not working.

Moreover, when the door 2 is unlocked, the second piezoelectric elements 41, 42 and the projecting tabs 321, 322 detect that the knob 22 provided on the room interior 101 side of the door 2 has turned to the second turn position. When the second piezoelectric elements 41, 42 and the projecting tabs 321, 322 detect that the knob 22 has turned to the second turn position, the control device 3 and the outlet device 12 supply power to the electrical device 16 provided in the room interior 101. This, for example, enables power to be supplied to the electrical device 16 when the occupant of the residence 100 returns home and unlocks the door 2. This enables the electrical device 16 to be placed in an operable state when the occupant of the residence 100 returns home, thereby enabling convenience to be raised for the occupant.

Moreover, the second piezoelectric elements 41, 42 generate power when pressed by the projecting tabs 321, 322 when the knob 22 is turned to the second turn position. The second control signal is output based on the power generated by the second piezoelectric elements 41, 42. On receipt of the second control signal, the outlet device 12 switches ON the switch 14 so as to supply power to the electrical device 16. The second control signal can be output utilizing the power generated by the second piezoelectric elements 41, 42. A power supply to the control device 3 from the alternating current source G1, for example, in order to output the second control signal is thus rendered unnecessary. This thereby enables a reduction in the power consumption of the residence 100.

Moreover, a plurality of the projecting tabs 321, 322 and a plurality of the second piezoelectric elements 41, 42 are provided. The second control signal is output when at least one out of the second piezoelectric elements 41, 42 generates power. When this is performed, the outlet device 12 switches ON the switch 14 so as to supply power to the electrical device 16. This thereby enables power to be reliably supplied to the electrical device 16, even if, for example, one out of the second piezoelectric elements 41, 42 is not working.

Moreover, the motion sensor 36 detects whether or not a person is present in the room interior 101. When the motion sensor 36 detects that there is nobody present in the room interior 101, and the first piezoelectric elements 43, 44 and the projecting tabs 321, 322 detect that the knob 22 has turned to the first turn position, the outlet device 12 cuts off the power supply to the electrical device 16. Moreover, when the motion sensor 36 detects that a person is present in the room interior 101, and the first piezoelectric elements 43, 44 and the projecting tabs 321, 322 detect that that the knob 22 has turned to the first turn position, the outlet device 12 does not cut off the power supply to the electrical device 16. This thereby enables a reduction in the power consumption of the residence 100, while maintaining convenience in the residence 100.

Moreover, when the switches 351 to 354 of the switch device 350 are all switched OFF, the outlet device 12 is disabled from cutting off the power supply to the electrical device 16 regardless of whether or not the first piezoelectric elements 43, 44 and the projecting tabs 321, 322 have detected turning of the knob 22. This, for example, enables the power supply to the electrical device 16 to be prevented from being cut off when the occupant of the residence 100 is present in the room interior 101 Namely, this enables convenience to be raised for the occupant of the residence 100.

Moreover, the cover 32 has a shape that conforms to the external profile of the knob 22 and covers the knob 22, and the projecting tabs 321, 322 are fixed to the cover 32. The cover 32 turns together with the knob 22. The main body 33 includes the exposure hole 33A that exposes the cover 33 such that the cover 33 can be turnably operated. The main body 33 houses the cover 32, the projecting tabs 321, 322, the second piezoelectric elements 41, 42, and the first piezoelectric elements 43, 44.

Moreover, the main body 33 is detachably provided to the room interior 101 side of the door 2. Thus, maintenance of the main body 33, for example, is comparatively easy.

The foregoing embodiment is for facilitating the understanding of the present invention, and is not to be construed as to limit the present invention. The present invention may be modified and/or improved without departing from the gist thereof, and the present invention encompasses equivalents thereof.

In the foregoing embodiment, explanation has been given in which two of each of the first piezoelectric elements 43, 44, the second piezoelectric elements 41, 42, and the projecting tabs 321, 322 are provided; however there is no limitation thereto. For example, three or more of each may be provided, or a single one of each may be provided.

Moreover, explanation has been given in which the motion sensor 36 operates using power output from the respective piezoelectric elements. However, there is no limitation thereto. For example, the motion sensor 36 may operate using power supplied by a battery or the like that supplies the motion sensor 36 with power.

### [Reference Signs List]

- 2:: door
- 3:: control device
- 12:: outlet device
- 16:: electrical device
- 22:: knob
- 41, 42:: second piezoelectric elements
- 43, 44:: first piezoelectric elements
- 321, 322:: projecting tabs

## Claims

1. A power control device comprising:
a first detection device that detects that a knob provided on a room interior side of a door has turned to a first turn position when the door is locked; and
a cutoff device that cuts off power supply to an electrical device provided in the room interior when the first detection device has detected that the knob has turned to the first turn position.

2. The power control device according to claim 1, wherein
the first detection device includes
a projecting tab that turns together with the knob, and
a piezoelectric element that is pressed by the projecting tab and outputs a cutoff signal to cut off power when the knob has turned to the first turn position, and the cutoff device cuts off power supply to the electrical
device when the piezoelectric element has output the cutoff signal.

3. The power control device according to claim 2, wherein
a plurality of the projecting tabs are provided,
a plurality of the piezoelectric elements are provided so as to be respectively pressed by the plurality of projecting tabs and to respectively output the cutoff signal when the knob has turned to the first turn position, and
the cutoff device cuts off power supply to the electrical device when at least one piezoelectric element out of the plurality of piezoelectric elements has output the cutoff signal.

4. The power control device according to claim 1, further comprising:
a second detection device that detects that the knob has turned to a second turn position different to the first turn position when the door is unlocked; and
a supply device that supplies power to the electrical device when the second detection device has detected that the knob has turned to the second turn position.

5. The power control device according to claim 4, wherein
the second detection device includes
a projecting tab that turns together with the knob, and
a piezoelectric element that is pressed by the projecting tab and outputs a supply signal to supply power when the knob has turned to the second turn position, and
the supply device supplies power to the electrical device when the piezoelectric element has output the supply signal.

6. The power control device according to claim 5, wherein
a plurality of the projecting tabs are provided,
a plurality of the piezoelectric elements are provided so as to be respectively pressed by the plurality of projecting tabs and respectively output the supply signal when the knob has turned to the second turn position, and
the supply device supplies power to the electrical device when at least one piezoelectric element out of the plurality of piezoelectric elements has output the supply signal.

7. The power control device according to claim 1, further comprising a detection device that detects whether or not a person is present in the room interior, wherein
the cutoff device
cuts off power supply to the electrical device when the detection device has detected that there is nobody present in the room interior and the first detection device has detected that the knob has turned to the first turn position, and
does not cut off power supply to the electrical device when the detection device has detected that a person is present in the room interior and the first detection device has detected that the knob has turned to the first turn position.

8. The power control device according to claim 1, further comprising a disabling device that disables the cutoff device from cutting off power supply to the electrical device regardless of a detection result of the first detection device.

9. The power control device according to claim 2, further comprising:
a cover that has a shape conforming to an outer profile of the knob and covering the knob, the projecting tab being fixed to the cover, the cover turning together with the knob; and
a housing that includes an exposure hole exposing the cover so as to enable turn operation of the cover and receives the cover, the projecting tab and the piezoelectric element.

10. The power control device according to claim 9, wherein
the housing is detachably provided on the room interior side of the door.
